# EUROPÄISCHE PATENTSCHRIFT

(11) **EP 2 577 097 B1**
(45) Veröffentlichungstag und Bekanntmachung des Hinweises auf die Patenterteilung: **25.11.2015**
(21) Anmeldenummer: 11723434.4
(22) Anmeldetag: 31.05.2011
(51) Int. Cl.: F16H 3/093, F16H 37/04

(54) **GETRIEBEANORDNUNG**
GEAR ASSEMBLY
SYSTÈME DE TRANSMISSION

(30) Priorität: 01.06.2010 DE 102010029597
(43) Veröffentlichungstag der Anmeldung: 10.04.2013
(73) Patentinhaber: Deere & Company, Moline, IL 61265-8098 (US)
(72) Erfinder: OTTEN, Ulrich, 67396 Speyer (DE)
(74) Vertreter: Dehnhardt, Florian Christopher
(86) Internationale Anmeldenummer: PCT/EP2011/058941
(87) Internationale Veröffentlichungsnummer: WO 2011/151322

(56) Entgegenhaltungen:
- EP-A1- 1 624 232
- EP-A2- 1 961 994
- EP-A2- 1 961 996
- US-A1- 2007 131 046

## Beschreibung

Die Erfindung betrifft eine Getriebeanordnung für ein landwirtschaftliches Fahrzeug, mit einer ersten Getriebeeinheit, einer ausgangsseitig daran gekoppelten zweiten Getriebeeinheit und einer ausgangsseitig daran gekoppelten dritten Getriebeeinheit, wobei die zweite Getriebeeinheit eine Eingangswelle, eine Ausgangswelle und zwei Vorgelegewellen umfasst, wobei die Eingangswelle mit den Vorgelegewellen in Antriebsverbindung und die Vorgelegewellen mit der Ausgangswelle in Antriebsverbindung bringbar sind und wobei die dritte Getriebeeinheit eine Eingangswelle umfasst, die mit einer dazu parallel angeordneten Ausgangswelle in Antriebsverbindung bringbar ist. Ferner betrifft die Erfindung eine Getriebegehäuseanordnung für eine solche Getriebeanordnung.

Im Stand der Technik sind Getriebeanordnungen für landwirtschaftliche Arbeitsfahrzeuge bekannt, beispielsweise für Traktoren oder Erntemaschinen, die einen Getriebeaufbau durch mehrere hintereinander angeordnete Getriebeeinheiten aufweisen. Derartige Getriebeanordnungen dienen dazu, den hohen Anforderungen in Bezug auf eine möglichst feinstufige aber auch umfangreiche Spreizung des Getriebes, wie es bei landwirtschaftlichen Arbeitsfahrzeugen gefordert wird, gerecht zu werden. Ferner werden derartige Getriebeanordnungen aus denselben Gründen auch im Bereich von Baumaschinen eingesetzt.

Die EP 1624232 A1 offenbart eine Getriebeanordnung für ein Arbeitskraftfahrzeug mit mehreren hintereinander angeordneten Getriebeeinheiten. Eine erste Getriebeeinheit ist als Umkehrgetriebe ausgebildet und mit einer zweiten Getriebeeinheit verbunden. Die zweite Getriebeeinheit weist eine mit einer Verteilerstufe verbundene Eingangswelle und eine Ausgangswelle auf. Ferner sind in der zweiten Getriebeeinheit zwei Vorgelegewellen vorgesehen. Die Vorgelegewellen werden über die Verteilerstufe angetrieben. Mittels Zahnradpaarungen, die durch Zahnräder auf den Vorgelegewellen und der Ausgangswelle angeordnet sind, kann die Ausgangswelle mit unterschiedlichen Gangstufen angetrieben werden. Die Ausgangswelle der zweiten Getriebeeinheit ist mit einer dritten Getriebeeinheit verbunden. Die dritte Getriebeeinheit stellt ein Nachschaltgetriebe dar und ermöglicht eine weitere Abstufung der in der zweiten Getriebeeinheit gewählten Gangstufen. Die offenbarte Getriebeanordnung ist darauf ausgerichtet, bei einer entsprechenden Gesamtspreizung eine vorteilhafte Gangabstufung mit einem vergleichsweise geringen Konstruktionsaufwand zu ermöglichen. Der gewählte Konstruktionsaufbau, der zudem durch die Art der ausgewählten Getriebeeinheiten bedingt ist, weist jedoch nur einen geringen Grad an Kompaktheit und Variabilität auf, zumal ausgehend von der gewählten Konstruktion, Variationsmöglichkeiten in Bezug auf vorgegebene bzw. ausgewählte maximale oder minimale Ausgangsdrehzahlen problematisch und nur mit relativ großem baulichen Aufwand und großer Teilevielfalt realisierbar sind. Diesbezüglich muss beispielsweise der Achsabstand wenigstens einer Vorgelegewelle verändert werden, was weitere bauliche Maßnahmen, wie die Anpassung von Schaltgabeln etc. erfordert. Gleiches gilt für Möglichkeiten zur Erweiterung und Anpassung des durch die Getriebeanordnung vorgegebenen Leistungsspektrums, sowie für Möglichkeiten zur Kombination mit Zusatz- oder Nebenantrieben.

Nachteilig wirkt sich ferner aus, dass sowohl ein Aufbau der in EP 1624232 A1 offenbarten Getriebeanordnung, als auch ein Aufbau anderer bekannter Getriebeanordnungen der oben genannten Art, einen mit hohen Schwankungen behafteten und unsteten Verlauf des Wirkungsgrades bzw. der Verlustleistung in Abhängigkeit von der Drehzahl bzw. von der Fahrgeschwindigkeit des jeweiligen Fahrzeugs aufweist, was zur Umsetzung von Getriebeautomatismen, insbesondere bei der Anwendung von Fahrstrategien hinsichtlich eines optimierten Kraftstoffverbrauchs, von Nachteil ist, da es bei derart schwankungsbehafteten bzw. unsteten Verläufen schnell zu Pendel-Schaltungen kommen kann. Ferner eignet sich eine derartige Getriebeanordnung auch nur bedingt für den Einsatz in einer landwirtschaftlichen Maschine, wie beispielsweise in einem Ackerschlepper, da eine Zapfwelle nur indirekt mit der Eingangswelle der Getriebeanordnung verbindbar ist.

Die US 2007/0131046 A1 zeigt ein Getriebe mit einem Planetenradsatz mit drei Reibkupplungen, um einen Drehmomentfluss über den Planentenradsatz zu einer Vorgelegewellen-Zahnradanordnung zu erreichen.

Die der Erfindung zugrunde liegende Aufgabe wird darin gesehen, eine Getriebeanordnung der eingangs genannten Art anzugeben, durch welche ein oder mehrere der vorgenannten Probleme überwunden werden.

Die Aufgabe wird erfindungsgemäß durch die Lehre des Patentanspruchs 1 bzw. 12 gelöst. Weitere vorteilhafte Ausgestaltungen und Weiterbildungen der Erfindung gehen aus den Unteransprüchen hervor.

Erfindungsgemäß ist eine Getriebeanordnung der eingangs genannten Art derart ausgebildet, dass die erste Getriebeeinheit als Planetengetriebe ausgebildet ist und ein dem Planetengetriebe zugehöriges Sonnenrad, die Eingangswelle und die Ausgangswelle der zweiten Getriebeeinheit, sowie die Eingangswelle der dritten Getriebeeinheit koaxial zueinander angeordnet sind, wobei ein Ausgang des Planetengetriebes drehfest mit der Eingangswelle der zweiten Getriebeeinheit und die Ausgangswelle der zweiten Getriebeeinheit drehfest mit der Eingangswelle der dritten Getriebeeinheit verbunden ist. Das Planetengetriebe kennzeichnet sich vorteilhaft durch seine geringe bauliche Ausdehnung in axialer Richtung innerhalb der Getriebeanordnung. Ferner wird durch die Verwendung des Planetengetriebes eine Rotationsachse für die gesamte Getriebeanordnung vorgegeben, auf der sowohl das Sonnenrad, die Eingangswellen der zweiten und dritten Getriebeeinheit als auch die Ausgangswelle der zweiten Getriebeeinheit angeordnet werden können. Durch die gegebene Koaxialität der genannten Wellen bzw. des Sonnenrads zueinander, werden besonders günstige Lagerungsmöglichkeiten für die Getriebebauteile geschaffen, was wiederum eine kompakte Bauweise mit Möglichkeiten zur Vormontage einzelner Getriebekomponenten ermöglicht und damit ein geringerer Montageaufwand und ein hoher Grad an Kompatibilität und Variabilität geschaffen wird.

Die Eingangswelle und die Ausgangswelle der zweiten Getriebeeinheit weisen eine gemeinsame Lagerstelle auf, wobei es möglich ist, die Ausgangswelle an der Eingangswelle zu lagern, beispielsweise durch Ausbildung der Eingangswelle als Hohlwelle und Lagerung der Ausgangswelle innerhalb der Eingangswelle oder umgekehrt. Zur Lagerung in der gemeinsamen Lagerstelle sind wenigstens zwei Lager vorgesehen, von denen eines der Eingangswelle und eines der Ausgangswelle zuzuordnen ist. Durch eine gemeinsame Lagerstelle für beide Wellen wird der Bauraum entlang der Rotationsachse der Wellen minimiert.

In der zweiten Getriebeeinheit können die Vorgelegewellen mit der Ausgangswelle über ausgewählte, zueinander verschiedene Zahnradpaarungen in Antriebsverbindung gebracht werden, wobei auf den Vorgelegewellen Kupplungseinrichtungen vorgesehen sind, welche eine Ansteuerung bzw. Beschaltung der ausgewählten Zahnradpaarungen ermöglichen. Üblicherweise werden je Kupplungseinrichtung zwei Zahnradpaare angesteuert bzw. beschaltet, wobei auch das Beschalten von mehr oder weniger Zahnradpaaren mit einer Kupplungseinrichtung denkbar ist. Die Anzahl der Kupplungseinrichtungen auf den jeweiligen Vorgelegewellen kann variieren, wobei eine, zwei oder mehr vorgesehen sein können. Der Begriff Kupplungseinrichtung ist hier und im Folgenden, insbesondere in den Patentansprüchen, stellvertretend für Einrichtungen zu verstehen, mit denen Zahnradpaarungen angesteuert bzw. beschaltet werden können. Diesbezüglich können Synchronisiereinrichtungen oder auch Lamellenkupplungen, Klauenkupplungen oder dergleichen eingesetzt werden. Vorzugsweise kommen hier und im Folgenden jedoch Synchronisiereinrichtungen als Kupplungseinrichtungen zum Einsatz, wobei alternativ auch Lamellenkupplungen oder Klauenkupplungen oder dergleichen einsetzbar sind. Je nach Ausführung der zweiten Getriebeeinheit können die Zahnradpaarungen in Anzahl und Größe variieren und insbesondere in Abhängigkeit von den Abständen der Vorgelegewellen zur Eingangswelle bzw. Ausgangswelle verschieden ausgelegt werden. So kann die Getriebeanordnung an die von einem Verbraucher gewünschte Leistungsanforderung angepasst werden. Bei gleichen Abständen der Vorgelegewellen zu der Eingangswelle bzw. Ausgangswelle können mit der zweiten Getriebeeinheit im Wesentlichen konstante Gangstufensprünge realisiert werden, wobei auf den Vorgelegewellen die Synchronzahnräder der einen Vorgelegewelle identisch mit den Synchronzahnrädern der anderen Vorgelegewelle sind. Dies ermöglicht, dass die Zahnradpaarungen an beiden Vorgelegewellen die gleiche Zähnezahl, die gleiche Zahnform und produktionstechnisch gesehen, sogar die gleiche Teilenummer aufweisen können. Dies führt zu einer kostengünstigen Ausbildung der zweiten Getriebeanordnung. Konstante Gangstufensprünge können vor allem bei landwirtschaftlichen Fahrzeugen, beispielsweise bei Traktoren, von Vorteil sein, wobei die Größe der Gangstufensprünge hauptsächlich von der Charakteristik einer Antriebsmaschine des Fahrzeuges bestimmt wird und entsprechend an die spezifischen Anforderungen an das jeweilige landwirtschaftliche Fahrzeug anpassbar sind. Üblich sind für landwirtschaftliche Fahrzeuge konstante Gangstufensprünge von 16 % bis 25 %. Mit einer erfindungsgemäßen Getriebeanordnung können für die zweite Getriebeeinheit bei gleichem Achsabständen der Vorgelegewellen zu der Eingangs- bzw. Ausgangswelle Zahnradpaarungen ausgebildet werden, durch welche konstante Gangstufensprünge im genannten Bereich mit relativ kleinen Abweichungen von nur +/- 1,0 %-Punkte erzielt werden. Dabei kann hier ein gleich großer Modul für alle Zahnräder verwendet werden, was wiederum ein Kostenvorteil bei der Herstellung der Zahnräder bedeutet (Minimierung der Rüstzeitkosten der Verzahnungsmaschinen). Will man eine Abweichung von weniger als +/- 1,0 %-Punkte erreichen, kann dies durch eine Wahl von unterschiedlichen Modulen für die jeweiligen Zahnradpaare (Räderkette) erreicht werden. Bei ungleichem Achsabstand der Vorgelegewellen zu der Eingans - bzw. Ausgangswelle können mit der zweiten Getriebeeinheit auch variable Gangstufensprünge realisiert werden. Dabei sind die Synchronzahnräder auf der einen Vorgelegewelle nicht mehr gleich mit den gegenüberliegenden Synchronzahnrädern der anderen Vorgelegewelle. Allerdings bleibt fast der gesamte verbleibende Aufbau der zweiten Getriebeanordnung unverändert (wie Gehäuse, Kupplungseinrichtung, Lagerung von Wellen, Schaltungseinrichtungen sowie Montage- und Einstellabfolge des Getriebes). Einzig die Schaltgabel(n) der Schaltungseinrichtung müssen entsprechend auf die neue Geometrie angepasst werden. Variable Gangstufensprünge werden bei landwirtschaftlichen Fahrzeugen und Nutzfahrzeugen angewendet, wenn beispielsweise Transportzwecke im Vordergrund stehen. Die Getriebeanordnung zeichnet sich somit neben der bereits oben erwähnten hohen Kompaktheit durch ihren hohen Grad an Kompatibilität und Variabilität aus, da sie ermöglicht, unterschiedlichsten Anwendungen und Anforderungen gerecht zu werden, sowohl im landwirtschaftlichen Fahrzeugbereich als auch im Nutzfahrzeugbereich, ohne dass dabei grundsätzlich verschiedene Getriebekonzepte verwendet werden müssen.

Die Getriebeanordnung kann eine Getriebewelle aufweisen, welche zum einen eine Eingangswelle für das Planetengetriebe und zum anderen eine Ausgangswelle der Getriebeanordnung darstellt. Dazu kann die Getriebewelle als Eingangswelle für das Planetengetriebe beispielsweise stegseitig mit diesem verbunden sein und sich als Ausgangswelle koaxial zum Sonnenrad, zur Eingangswelle und Ausgangswelle der zweite Getriebeeinheit, sowie zur Eingangswelle der dritten Getriebeeinheit durch die erste, zweite und dritte Getriebeeinheit erstrecken. Das Sonnenrad des Planetengetriebes kann beispielsweise mit der Eingangswelle der zweiten Getriebeeinheit verbunden sein. Die mit dem Sonnenrad des Planetengetriebes verbundene Eingangswelle, sowie die Ausgangswelle der zweiten Getriebeeinheit, als auch die Eingangswelle der dritten Getriebeeinheit können als Hohlwellen ausgebildet sein, durch welche sich die Getriebewelle erstrecken kann. Die Getriebewelle kann so als Antrieb für eine weitere Getriebeeinheit genutzt werden. Beispielsweise kann die Getriebewelle als Antrieb für ein Zapfwellengetriebe dienen, welches als weitere Getriebeeinheit an die Getriebeanordnung angeschlossen werden kann.

In Bezug auf die dritte Getriebeeinheit ist die Eingangswelle mit der Ausgangswelle über zueinander verschiedene Zahnradpaarungen in Antriebsverbindung bringbar. Dazu kann auf der Eingangswelle oder auch auf der Ausgangswelle eine (oder mehrere) Kupplungseinrichtung(en) vorgesehen sein, welche eine Auswahl der entsprechenden Zahnradpaarungen ermöglicht. Die Ausgangswelle ist parallel zur Eingangwelle angeordnet und kann so als Eingangswelle für eine weitere Getriebeeinheit genutzt werden. Beispielsweise kann die Ausgangswelle der dritten Getriebeeinheit als Antrieb für ein Differenzialgetriebe dienen, welches als weitere Getriebeeinheit an die Getriebeanordnung angeschlossen werden kann. Die Ausgangswelle kann mit einem Kegelzahnrad versehen sein, über welches der Antrieb eines Differenzialgetriebes einleitbar ist. Die dritte Getriebeeinheit kann somit ein Gruppengetriebe darstellen, durch welches verschiedene Geschwindigkeitsstufen in Abhängigkeit von den von der zweiten Getriebeeinheit gelieferten Gangstufen realisierbar ist.

Ferner kann in der dritten Getriebeeinheit zwischen der Eingangswelle und der Ausgangswelle zusätzlich eine weitere Kupplungseinrichtung mit zugehöriger Zahnradpaarung angeordnet sein, durch welche die Eingangswelle mit der Ausgangswelle in Antriebsverbindung bringbar ist. Dadurch kann neben den oben genannten Zahnradpaarungen der Kupplungseinrichtung der dritten Getriebeeinheit eine zusätzliche Antriebsverbindung zwischen Eingangswelle und Ausgangswelle in der dritten Getriebeeinheit geschaffen werden, um beispielsweise eine maximale Ausgangsdrehzahl zu erzielen. So kann etwa eine zusätzliche Übersetzung geschaffen werden, die eine maximale Ausgangsdrehzahl ermöglicht, welche über den mit den oben genannten Zahnradpaarungen der Kupplungseinrichtung erzielbaren Ausgangsdrehzahlen liegt. Die Zahnradpaarungen der weiteren Kupplungseinrichtung sind zudem unabhängig von den anderen Zahnradpaarungen austauschbar bzw. variierbar, so dass ohne großen Montageaufwand eine Variierung dieser maximalen Ausgangsdrehzahl ermöglicht wird. So kann die Höchstgeschwindigkeit eines landwirtschaftlichen Fahrzeugs beispielsweise den gesetzlichen Vorschriften angepasst werden, ohne beispielsweise eine Übersetzung im Differenzialgetriebe vornehmen zu müssen, wie es bei herkömmlichen Getriebeanordnungen üblich ist. Beim Wechsel von der Übersetzung des Differentials verändern sich außerdem die Geschwindigkeiten in allen andern Gruppen ebenfalls, was nachteilig für deren Anwendungen ist. So kann eine Anpassung der maximalen Geschwindigkeit durch Veränderung der Zahnradpaarung der Kupplungseinrichtung in der dritten Getriebeeinheit sehr feinstufig und sehr dicht an die gesetzlichen Vorschriften in verschiedenen Ländern angepasst werden und zwar auch nachträglich und entsprechend kostengünstig, ohne dass die übrigen Geschwindigkeiten und Gangabstufungen der Getriebeanordnung davon betroffen sind.

Das Planetengetriebe ist als reversierfähiges bzw. reversibles Planetengetriebe ausgebildet, mit vorzugsweise doppelt angeordneten Planetenrädersätzen, wobei zwischen Sonnenrad und einem Hohlrad zwei miteinander kämmende Planetenrädersätze angeordnet sind, die über einen gemeinsamen Steg angetrieben werden. Für eine Betriebsrichtung kann das Sonnenrad drehfest mit dem Steg verbunden werden, wobei das Hohlrad frei läuft. Für eine entgegengesetzte Betriebsrichtung kann das Sonnerad vom Steg gelöst laufen, wobei das Hohlrad entsprechend blockiert wird. Eine andere Anordnung des Planetenradgetriebes ist auch denkbar, indem beispielsweise als angetriebenes Element das Sonnerad verwendet wird, wobei dann die Eingangswelle der zweiten Getriebeeinheit mit dem Steg als Abtriebselement zu verbinden wäre. Auch die Anordnung des Hohlrads als An- oder Abtriebselement ist denkbar.

In einer weiteren Getriebeeinheit kann eine Ausgangswelle parallel zu der Ausgangswelle der dritten Getriebeeinheit angeordnet und über ein Zahnradpaar und einer mit diesem verbunden Kupplungseinrichtung wahlweise zuschaltbar sein. So kann ausgehend von der Ausgangswelle der dritten Getriebeeinheit beispielsweise ein Vorderradantrieb realisiert werden, der parallel und unabhängig von einem mit der Getriebeanordnung verbundenen Differenzialgetriebe zu- bzw. abschaltbar ist. Die weitere Getriebeeinheit ist dabei optional an die dritte Getriebeeinheit ansetzbar. Ein mit der erfindungsgemäßen Getriebeanordnung versehenes Fahrzeug, kann somit auch als Allradfahrzeug ausgelegt werden, ohne dass eine gesonderte Getriebeanordnung konzeptioniert werden muss. Auch hier kommt die Variantenvielfalt der Getriebeanordnung erneut zum Tragen.

In einer weiteren Ausgestaltung der Getriebeanordnung kann zwischen der zweiten und der dritten Getriebeeinheit eine Zwischengetriebeeinheit angeordnet sein, durch welche die Ausgangswelle der zweiten Getriebeeinheit mit der Eingangswelle der dritten Getriebeeinheit koppelbar ist, wobei die Zwischengetriebeeinheit eine zuschaltbare Untersetzungsstufe umfasst. Die von der Ausgangswelle der zweiten Getriebeeinheit bereitgestellte Drehzahl wird hierbei entweder unverändert an die Eingangswelle der dritten Getriebeeinheit übertragen oder durch das Untersetzungsgetriebe herabgesetzt und in reduzierter Form der Eingangswelle der dritten Getriebeeinheit bereitgestellt. Ein derartiges Untersetzungsgetriebe wird in Fachkreisen auch als Kriechgangmodul bezeichnet, mit welchem extrem geringe Fahrgeschwindigkeiten realisierbar sind. Die Zwischengetriebeeinheit kann dabei optional im Fahrzeugaufbau zwischen die zweite und dritte Getriebeeinheit gesetzt werden, ohne dass größere Montageaufwendungen aufgebracht werden müssen. Je nach erforderlichem Anwendungs- bzw. Leistungsprofil kann ein mit der erfindungsgemäßen Getriebeanordnung versehenes Fahrzeug mit einem Kriechgangmodul versehen werden, ohne dass eine gesonderte Getriebeanordnung konzeptioniert werden muss. Auch hier kommt die Variantenvielfalt der Getriebeanordnung erneut zum Tragen.

Die in der zweiten Getriebeeinheit angeordneten Vorgelegewellen sind in Bezug auf ein Getriebegehäuse bzw. Gehäusemodul der zweiten Getriebeeinheit oberhalb der Eingangs- und Ausgangswelle angeordnet, wobei die Kupplungseinrichtungen in der zweiten Getriebeeinheit elektromagnetische Aktuatoren umfassen können, welche in Bezug auf das Gehäusemodul der zweiten Getriebeeinheit unterhalb der Ausgangswelle angeordnet sind. Die Vorgelegewellen befinden sich damit im oberen Teil des Gehäusemoduls und sind vorteilhaft oberhalb des Ölspiegels der Getriebeanordnung positioniert, wodurch Planschverluste reduziert bzw. ein verbesserter Wirkungsgrad erzielbar ist. Die elektromagnetischen Aktuatoren, welche die Schaltkräfte für die Synchronisierung an den Kupplungseinrichtungen erzeugen bzw. welche die Schaltkräfte an entsprechende Schaltungseinrichtungen weiter leiten, befinden sich unterhalb der Ausgangswelle der zweiten Getriebeeinheit im Ölstrom der Getriebeanordnung und können dadurch optimal gekühlt werden.

In der zweiten Getriebeeinheit kann zwischen der Eingangswelle und den Vorgelegewellen eine Doppelkupplungseinrichtung angeordnet sein, welche für die eine Vorgelegewelle eine erste zusätzliche und für die andere Vorgelegewelle eine zweite zusätzliche Kupplungseinrichtung umfasst, durch welche die Eingangswelle mit der jeweiligen Vorgelegewelle in Antriebsverbindung bringbar ist. Eine derartige Ausgestaltung der zweiten Getriebeeinheit stellt ein Doppelkupplungsgetriebe dar und ermöglicht ein Schalten zwischen den Gangstufen ohne dass eine Unterbrechung der Antriebsverbindung zwischen Eingangswelle und Ausgangswelle eintritt. Die Anordnung ist dabei so getroffen, dass die aufeinanderfolgenden Gänge abwechselnd einer der beiden Vorgelegewellen zugeordnet sind, so dass beispielsweise beim Schalten von einem Gang auf den nächsten Gang die dem nächsten Gang zugehörige Vorgelegewelle bei geöffneter erster zusätzlichen Kupplungseinrichtung von der Ausgangswelle über die Kupplungseinrichtungen zur Synchronisierung auf die dem Gang entsprechende Drehzahl gebracht werden kann, bevor die erste zusätzliche Kupplungseinrichtung geschlossen und zugleich die zweite zusätzliche Kupplungseinrichtung der anderen Vorgelegewelle geöffnet wird. So kann durch wechselseitiges Betätigen der zusätzlichen Kupplungseinrichtungen ohne Unterbrechung der Antriebsverbindung und unter Last ein Abtriebsmoment für die Ausgangswelle von der einen Vorgelegewelle auf die andere übertragen werden. Die zweite Getriebeeinheit kann jedoch auch ohne den beiden zusätzlichen Kupplungseinrichtungen, also auch ohne Doppelkupplungseinrichtung betrieben werden. In diesem Fall sind beide Vorgelegewellen in dauerhafter Antriebsverbindung mit der Eingangswelle. Das Schalten von einem Gang in einen anderen Gang erfolgt allein durch die entsprechenden mit den Zahnradpaarungen verbundenen Kupplungseinrichtungen zur Synchronisierung, jedoch mit Unterbrechung der jeweiligen Antriebsverbindung. Eine derartige Ausbildung der zweiten Getriebeeinheit stellt ein Handschaltgetriebe dar. Auch hier spiegelt sich die Variantenvielfalt der gesamten Getriebeanordnung wieder, indem man ohne wesentlichen baulichen Aufwand optional eine Getriebeanordnung mit Doppelkupplungsgetriebe oder mit Handschaltgetriebe realisieren kann.

Ferner wird eine für die oben beschriebene Getriebeanordnung ausgelegte Getriebegehäuseanordnung vorgeschlagen, wobei die Getriebegehäuseanordnung modular aufgebaut ist. Modular soll in diesem Zusammenhang bedeuten, dass die Getriebegehäuseanordnung aus mehreren Getriebegehäusen zusammengesetzt ist und für jede der oben beschriebenen Getriebeeinheiten bzw. für die Zwischengetriebeeinheit ein gesondertes Getriebegehäuse bzw. Gehäusemodul ausgebildet ist, welches im Zusammenbau mit den anderen Gehäusemodulen die gesamte Getriebegehäuseanordnung darstellt. Das erste Gehäusemodul für die erste Getriebeeinheit umfasst eine eingangsseitige Gehäusewand und einen ausgangsseitigen Gehäuseflansch. Das zweite Gehäusemodul für die zweite Getriebeeinheit umfasst eine eingangsseitige Gehäusewand und einen ausgangsseitigen Gehäuseflansch. Das dritte Gehäusemodul für die dritte Getriebeeinheit umfasst einen eingangsseitigen Gehäuseflansch, eine ausgangsseitige Gehäusewand und dazwischen innenseitig angeordnete Befestigungsstellen. Der Gehäuseflansch des ersten Gehäusemoduls kann an die Gehäusewand des zweiten Gehäusemoduls und der Gehäuseflansch des dritten Gehäusemoduls an das zweite Gehäusemoduls befestigt werden. Die Getriebegehäuseanordnung umfasst ferner eine Gehäuselagerwand für das zweite Gehäusemodul und eine Gehäuselagerwand für das dritte Gehäusemodul, wobei die Gehäuselagerwand für das zweite Gehäusemodul an den Gehäuseflansch des zweiten Gehäusemoduls und die Gehäuselagerwand für das dritte Gehäusemodul an den innenseitig angeordneten Befestigungsstellen des dritten Gehäusemoduls befestigbar ist.

Das dritte Gehäusemodul kann an den Gehäuseflansch oder an der Gehäuselagerwand des zweiten Gehäusemoduls an das zweite Gehäusemodul befestigt werden. Der Gehäuseflansch des zweiten Gehäusemoduls kann dabei derart bemessen sein, dass die Gehäuselagerwand für das zweite Gehäusemodul an einer inneren Befestigungsfläche des Gehäuseflansches und der eingangsseitige Gehäuseflansch des dritten Gehäusemoduls an einer äußeren Befestigungsfläche des Gehäuseflansches befestigt wird, so dass vorteilhaft nur eine Trennfläche zwischen dem zweiten und dem dritten Gehäusemodul gebildet wird. Wie oben erwähnt, ist es auch möglich, die Gehäuselagerwand des zweiten Gehäusemoduls an dessen Gehäuseflansch und den eingangsseitigen Gehäuseflansch des dritten Gehäusemoduls an die Gehäusewand des zweiten Gehäusemoduls zu befestigen, wobei in diesem Falle zwei Trennflächen gebildet würden. Alternativ kann in analoger Weise die Befestigung der Gehäuselagerwand des zweiten Gehäusemoduls auch an einer innen liegenden Befestigungsfläche des Gehäuseflansches des dritten Gehäusemoduls erfolgen.

Die innenseitig angeordneten Befestigungsstellen des dritten Gehäusemoduls sind derart innerhalb des Gehäusemoduls angeordnet, dass bei montiertem Gehäusemodul die montierte Gehäuselagerwand des dritten Gehäusemoduls zwischen dem Zahnradpaar mit der weiteren Kupplungseinrichtung und den anderen Zahnradpaarungen mit Kupplungseinrichtungen angeordnet ist. Eine derartige Anordnung ermöglicht, dass sich ein Wechsel des Zahnradpaares der weiteren Kupplungseinrichtung in der dritten Getriebeeinheit, also des Zahnradpaares, mit welchem die maximale Ausgangsdrehzahl variierbar ist, leicht und kostengünstig ausführen lässt, ohne die dritte Getriebeeinheit komplett demontieren zu müssen. Hier werden die Vorteile einer erfindungsgemäßen Getriebeanordnung bzw. der dafür ausgebildeten Getriebegehäuseanordnung im Hinblick auf einen geringeren Montageaufwand, hohen Grad an Kompatibilität und Variabilität erneut deutlich.

Ferner kann ein Zwischengehäusemodul für eine Zwischengetriebeeinheit vorgesehen sein, welches einen eingangsseitigen und einen ausgangsseitigen Gehäuseflansch aufweist. Der eingangsseitige Gehäuseflansch ist derart ausgelegt, dass dieser an den ausgangsseitigen Gehäuseflansch oder, wie auch zum dritten Gehäusemodul beschrieben, an der Gehäuselagerwand des zweiten Gehäusemoduls befestigbar ist. Der ausgangsseitige Gehäuseflansch ist derart ausgelegt, dass dieser an den eingangsseitigen Gehäuseflansch des dritten Gehäusemoduls befestigbar ist. Dadurch wird für den Fall, dass eine Zwischengetriebeeinheit in Form eines Kriechgangmoduls gewünscht ist, der Montageaufwand auf ein Minimum reduziert. Das Zwischengehäusemodul kann entsprechende innen liegende Lagerstellen, beispielsweise in Form von Stegen oder anderen Befestigungseinrichtungen aufweisen, auf denen Konstruktionselemente der Zwischengetriebeeinheit, wie z. B. eine Zahnraduntersetzungsstufe lagerbar sind. Insbesondere auch hier wird der geringe Montageaufwand und hohe Grad an Kompatibilität und Variabilität gegenüber herkömmlichen Getriebegehäuseanordnungen deutlich.

Ferner kann ein weiteres Gehäusemodul für eine weitere Getriebeeinheit vorgesehen sein, welches einen eingangsseitigen Gehäuseflansch aufweist, wobei dieser an einen zwischen dem eingangsseitigen Gehäuseflansch und der ausgangsseitigen Gehäusewand des dritten Gehäusemoduls angeordneten Anschlussflansch befestigbar ist. Letzterer kann beispielsweise auf der Unterseite des dritten Gehäusemoduls angeordnet sein, an dem beispielsweise ein in Form eines Antriebsmoduls für einen Vorderradantrieb ausgebildete vierte Getriebeeinheit anbaubar bzw. anschließbar ist. Ein sich durch den Anschlussflansch und dem eingangsseitigen Gehäuseflansch des vierten Gehäusemoduls erstreckende Zahnradpaarung kann dabei das für einen Vorderradantrieb erforderliche Antriebsmoment liefern, wobei die Zahnradpaarung durch ein auf der Ausgangswelle der dritten Getriebeeinheit angeordnetes Zahnrad und durch ein in der vierten Getriebeeinheit angeordnetes Zahnrad herstellbar ist. Neben dem beschriebenen weiteren Gehäusemodul können auch noch weitere Gehäusemodule an die bestehende modulare Getriebegehäuseanordnung angeschlossen werden. So kann beispielsweise über einen weiteren Anschlussflansch an dem dritten Gehäusemodul ein Parksperrenmodul angeschlossen werden, welches das Blockieren eines auf der Eingangs- oder Ausgangswelle der dritten Getriebeeinheit angeordneten Zahnrads ermöglicht. Weitere Anschlussmöglichkeiten für weitere Gehäusemodule können an der Gehäusewand des dritten Gehäusemoduls vorgesehen sein, um beispielsweise ein Differenzialgetriebe oder ein Zapfwellengetriebe an die sich durch die Gehäusewand des dritten Gehäusemoduls erstreckende Getriebewelle bzw. Ausgangswelle anschließen zu können.

Neben den bereits genannten Vorteilen in Bezug auf Kompaktheit, Kompatibilität und Variabilität ermöglicht die erfindungsgemäße Getriebeanordnung einen diskreten und stetigen Verlauf des Wirkungsgrades bzw. der Verlustleistung der Getriebeanordnung über das gesamte Spektrum der Drehzahl bzw. der Fahrgeschwindigkeit eines Fahrzeugs bereitzustellen. Dies ist zur Umsetzung von Getriebeautomatismen, zum Beispiel bei der Anwendung von Fahrstrategien hinsichtlich eines optimierten Kraftstoffverbrauchs, von großem Vorteil. Bei herkömmlichen Getriebeanordnungen ist wie eingangs bereits erwähnt, ein eher unsteter Verlauf der Verlustleistung der Getriebeanordnung in Abhängigkeit der Drehzahl bzw. der Fahrgeschwindigkeit eines Fahrzeugs zu verzeichnen, was zur Umsetzung der genannten Fahrstrategien nicht optimal ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein Getriebeschema einer ersten erfindungsgemäßen Getriebeanordnung,
- Fig. 2: ein Getriebeschema einer zweiten erfindungsgemäßen Getriebeanordnung,
- Fig. 3: ein Getriebeschema einer zweitenn erfindungsgemäßen Getriebegehäuseanordnung,
- Fig. 4: eine schematische Darstellung eines Getriebequerschnitts der zweiten Getriebeeinheit und
- Fig. 5: ein Getriebeschema einer weiteren erfindungsgemäßen Getriebegehäuseanordnung.

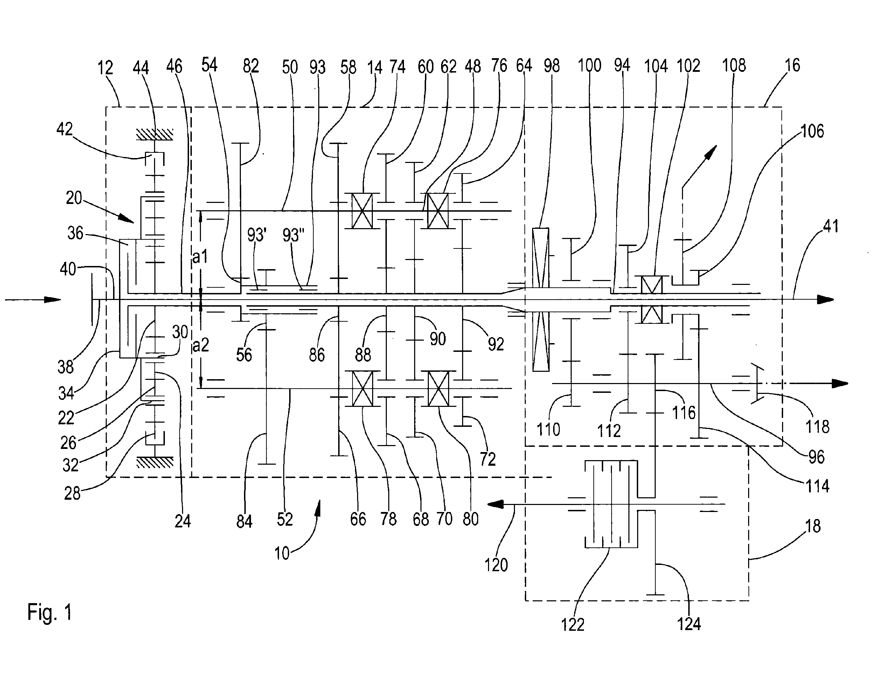

In Figur 1 ist eine erfindungsgemäße Getriebeanordnung 10 schematisch dargestellt. Die Getriebeanordnung 10 umfasst eine erste Getriebeeinheit 12, eine zweite Getriebeeinheit 14, eine dritte Getriebeeinheit 16 und eine weitere (vierte) Getriebeeinheit 18.

Die erste Getriebeeinheit 12 ist als reversierbares, doppeltes Planetengetriebe 20 ausgebildet, welches über zwei Gangstufen verfügt, wobei ein Sonnenrad 22 des Planetengetriebes 20 mit einem ersten Satz Planetenräder 24 kämmt. Der erste Satz Planetenräder 24 kämmt einerseits mit dem Sonnenrad 22 und andererseits mit einem zweiten Satz Planetenräder 26. Der zweite Satz Planetenräder 26 kämmt wiederum mit einem Hohlrad 28. Die Planetenräder 24, 26 des ersten und zweiten Satzes sind auf jeweiligen Lagerachsen 30, 32 gelagert, wobei die Lagerachsen 30 des ersten Satzes Planetenräder 24 einen geringeren Abstand zum Sonnenrad 22 aufweisen als die Lagerachsen 32 des zweiten Satzes Planetenräder 26. Die gesamten Lagerachsen 30, 32 und damit der erste und der zweite Satz Planetenräder 24, 26 sind auf einem gemeinsamen Planetenträger 34 angeordnet. Zwischen Planetenträger 34 und Sonnenrad 22 ist eine Kupplungseinrichtung 36 angeordnet. Eine Getriebewelle 38 dient als Eingangswelle 40 für das Planetengetriebe 20 und als Ausgangswelle 41 für die Getriebeanordnung 10. Die Eingangswelle 40 ist mit dem Planetenträger 34 verbunden. Das Hohlrad 32 kann über eine Blockiereinrichtung 42 mit einem Gehäuseteil 44 der Getriebeanordnung 10 verbunden bzw. von diesem getrennt werden. Das Sonnenrad 22 ist mit einer Eingangswelle 46 der zweiten Getriebeeinheit 14 koaxial verbunden.

Die erste Getriebeeinheit stellt ein sogenanntes Reversiergetriebe dar und hat die Aufgabe, eine Eingangsdrehrichtung für die Getriebeanordnung 10 vorzugeben, wobei in Abhängigkeit von der Betätigung der Kupplungseinrichtung 36 bzw. von der Blockiereinrichtung 42 die Eingangsdrehrichtung umkehrbar ist. Dadurch kann bei einem mit der Getriebeanordnung 10 betriebenen Fahrzeug ein Vorwärts- oder Rückwärtsgang eingestellt werden. Für die Beschaltung der Kupplungseinrichtung 36 bzw. der Blockiereinrichtung 42 ist jeweils ein gesondertes Proportionalventil (nicht gezeigt) angeordnet, damit ein optimaler Fahrkomfort, insbesondere beim Drehrichtungswechsel und beim Anfahrvorgang, ermöglicht werden kann.

Die zweite Getriebeeinheit 14 ist als Stirnradgetriebe ausgebildet und weist neben der Eingangswelle 46 eine Ausgangswelle 48, eine erste Vorgelegewelle 50 und eine zweite Vorgelegewelle 52 auf, wobei Eingangswelle 46 und Ausgangswelle 48 koaxial angeordnet sind. Die Eingangswelle 46 ist mit einem ersten Zahnrad 54 und mit einem zweiten Zahnrad 56 bestückt, wobei das zweite Zahnrad 56 einen größeren Durchmesser als das erste Zahnrad 54 aufweist. Die Vorgelegewellen 50, 52 sind jeweils mit vier Synchronzahnrädern 58, 60, 62, 64 bzw. 66, 68, 70, 72 mit jeweils abnehmenden Durchmessern bestückt, welche über paarweise angeordnete Kupplungseinrichtungen 74, 76 bzw. 78, 80 mit der entsprechenden Vorgelegewelle 50 bzw. 52 in Antriebsverbindung gebracht werden können bzw. beschaltet werden können. Ferner sind die Vorgelegewellen 50, 52 mit jeweils einem Zahnrad 82, 84 versehen, wobei das Zahnrad 82 mit dem Zahnrad 54 der Eingangswelle 46 und das Zahnrad 84 mit dem Zahnrad 56 der Eingangswelle 46 kämmt. Die Eingangswelle 46 treibt somit über die Zahnradpaarungen 54, 82 bzw. 56, 84 die erste und zweite Vorgelegewelle 50, 52 an. Die Ausgangswelle 48 ist mit vier Zahnrädern 86, 88, 90, 92 mit jeweils zunehmenden Durchmessern bestückt, wobei das Zahnrad 86 gleichzeitig mit den Synchronrädern 58, 66, das Zahnrad 88 gleichzeitig mit den Synchronrädern 60, 68, das Zahnrad 90 gleichzeitig mit den Synchronrädern 62, 70 und das Zahnrad 92 gleichzeitig mit den Synchronrädern 64, 72 kämmt. Die Eingangswelle 46 und die Ausgangswelle 48 sind ineinander gelagert und nicht drehfest miteinander verbunden, wobei beide Wellen als Hohlwellen ausgebildet sind und die Ausgangswelle 48 an ihrem der Eingangswelle 46 zugewandtem Ende an einer gemeinsamen Lagerstelle 93 in der Eingangswelle 46 an deren der Ausgangswelle 48 zugewandten Ende radial gelagert ist. Zur Lagerung der Ausgangswelle 48 in der Eingangswelle 46 sind an der gemeinsamen Lagerstelle 93 zwei Lager 93', 93" vorgesehen, von denen eines der Ausgangswelle 48 und eines der Eingangswelle 46 zuzuordnen ist.

Die dritte Getriebeeinheit 16 umfasst eine Eingangswelle 94 und eine parallel dazu angeordnete Ausgangswelle 96. Die Eingangswelle 94 ist drehfest mit der Ausgangswelle 48 der zweiten Getriebeeinheit 14 verbunden. Auf der Eingangswelle 94 der dritten Getriebeeinheit 16 sind ein mit einer weiteren Kupplungseinrichtung 98 verbundenes erstes Zahnrad 100 sowie zwei mit einer Kupplungseinrichtung 102 verbundene Synchronzahnräder 104, 106 kleineren Durchmessers angeordnet, wobei das Synchronzahnrad 104 einen größeren Durchmesser aufweist als das Synchronzahnrad 106. Ein weiteres Zahnrad 108 ist mit dem Synchronzahnrad 106 verbunden und dient als Blockierelement für eine Parksperreneinrichtung (nicht gezeigt). Das erste Zahnrad 100 auf der Eingangswelle 94 kämmt mit einem ihm gegenüber auf der Ausgangswelle 96 angeordnetem ersten Zahnrad 110. Das Synchronzahnrad 104 kämmt mit einem ihm gegenüber auf der Ausgangswelle 96 angeordnetem zweiten Zahnrad 112. Das Synchronzahnrad 106 kämmt mit einem ihm gegenüber auf der Ausgangswelle 96 angeordnetem dritten Zahnrad 114, wobei die genannten Zahnräder 110, 112, 114 auf der Ausgangswelle 96 zunehmende Durchmesser aufweisen. Zwischen dem zweiten und dem dritten Zahnrad 112, 114 ist ein weiteres Zahnrad 116 angeordnet und dient als Antriebszahnrad für die weitere (vierte) Getriebeeinheit 18. An einem ausgangsseitigen Ende der Ausgangswelle 96 ist ein Kegelzahnrad 118 angeordnet, welches ebenfalls als Antriebszahnrad für eine weitere Getriebeeinheit (nicht dargestellt) dient, beispielsweise als Antriebszahnrad für ein an die dritte Getriebeeinheit 16 angeflanschtes Differenzialgetriebe. Die Eingangswelle 94 der dritten Getriebeeinheit 16 ist wie die Eingangswelle 46 und die Ausgangswelle 48 der zweiten Getriebeeinheit als Hohlwelle ausgebildet, so dass sich die Getriebewelle 40 der Getriebeanordnung 10 von einer Eingangsseite der ersten Getriebeeinheit 12 bis zu einer Ausgangsseite der dritten Getriebeeinheit 16 durch die Getriebeanordnung 10 erstreckt und dort als Ausgangswelle 41 für die Getriebeanordnung 10 zur Verfügung steht. Die dritte Getriebeeinheit 16 bietet eine flexible Gestaltung von Gruppen-Übersetzungen. So können die Anforderungen für ein mit der Getriebeanordnung 10 bestücktes Fahrzeug auf die speziellen Kundenwünsche angepasst werden.

Die weitere (vierte) Getriebeeinheit 18 umfasst eine Ausgangswelle 120, auf der ein mit einer Kupplungseinrichtung 122 gekoppeltes Zahnrad 124 angeordnet ist, welches mit dem zum Antrieb der weiteren Getriebeeinheit 18 vorgesehenen Zahnrad 116 der dritten Getriebeeinheit 16 kämmt. Die Ausgangswelle 120 ist im wesentlichen parallel zur Ausgangswelle 41 der dritten Getriebeeinheit 16 angeordnet. Durch Beschalten der Kupplungseinrichtung 122 kann ein entsprechendes Abtriebsmoment an der Ausgangswelle 120 hinzugeschaltet bzw. abgeschaltet werden. Mit der weiteren (vierten) Getriebeeinheit 18 kann beispielsweise ein aus der dritten Getriebeeinheit 16 abgezweigter und über die Kupplungseinrichtung 122 hinzu- bzw. abschaltbarer Vorderradantrieb für ein mit der Getriebeanordnung 10 bestücktes Fahrzeug realisiert werden, wobei beispielsweise die Ausgangswelle 120 mit einem Antriebsstrang für einen Vorderradantrieb (nicht gezeigt) verbunden wird.

Die als 3-Gruppen-Übersetzungsgetriebe ausgebildete dritte Getriebeeinheit 16 bietet beispielsweise für ein als Traktor ausgebildetes Fahrzeug drei Arbeitsbereiche. Ein erster Arbeitsbereich "Feldarbeit" beispielsweise, kann auf Anwendungen für schwerere Arbeiten auf dem Feld ausgelegt sein, wobei meist schwere Zugarbeiten in einem niedrigeren Geschwindigkeitsbereich (z.B. zwischen 2 und 11 km/h) zu verrichten sind. Ein zweiter Arbeitsbereich "Zapfwellenbetrieb" beispielsweise, kann auf Anwendungen für leichtere Zugarbeiten auf dem Feld unter Einsatz eines Zapfwellenantriebs ausgelegt sein, wobei ein mittlerer Geschwindigkeitsbereich zum Tragen kommen kann (z.B. zwischen 4,5 und 18 km/h). Ein dritter Arbeitsbereich "Transport" beispielsweise, kann auf reine Transportarbeiten ausgelegt sein und sieht einen höheren Geschwindigkeitsbereich vor (z.B. zwischen 14 km/h und Höchstgeschwindigkeit). Ferner ist es üblich, dass Kundenwünsche und unterschiedliche gesetzliche Vorschriften die Anpassung der Getriebeanordnung 10 an unterschiedlich hohe Höchstgeschwindigkeiten erfordern. Diese sollen möglichst genau erreicht werden. Üblicherweise wird dies in der Änderung der Übersetzung eines dem Übersetzungsgetriebe nachgeschalteten Differenzialgetriebes (nicht gezeigt) verwirklicht. Dies ist in der Regel kostenintensiv und meist auch nicht feinstufig möglich und würde ferner eine Anpassung einer eventuell von der dritten Getriebeeinheit 16 abgezweigten weiteren Getriebeeinheit 18 erfordern, wie beispielsweise ein Vorderradantrieb, wie er oben bereits beschrieben wurde. Bei der Anpassung einer Übersetzung des Differentials verändern sich außerdem auch die Geschwindigkeiten in den anderen Gruppen, was unter Umständen nachteilig für die Anwendungen in ihren Arbeitsbereichen ist. Eine Anpassung der Höchstgeschwindigkeit ist hingegen bei der dargestellten Getriebeanordnung 10 sehr feinstufig möglich und kann leicht nachträglich, montagefreundlich und kostengünstig durch Anpassen der Zahnradpaarung der Zahnräder 100 und 110 in der dritten Getriebeeinheit 16 realisiert werden. Ein großer Vorteil dabei ist, dass die Geschwindigkeiten und Gangabstufungen der anderen Arbeitsbereiche, beispielsweise "Feldarbeit" und "Zapfwellenbetrieb", unverändert bleiben.

Die in Figur 1 dargestellte Getriebeanordnung 10 umfasst mit der zweiten Getriebeeinheit 14 eine Getriebeeinheit in Form eines Handschaltgetriebes, bei dem die Vorgelegewellen 50, 52 im permanenten Antrieb durch die Eingangswelle 46 stehen. Durch Betätigen der Kupplungseinrichtungen 74, 76 bzw. 78, 80 können die verschiedenen Gangstufen eingestellt werden, wobei die Betätigung der Kupplungseinrichtungen 74, 76 bzw. 78, 80 durch Handbetätigung oder auch automatisiert, beispielsweise elektrisch, elektromagnetisch oder hydraulisch durch entsprechende Schaltmittel und Aktuatoren (nicht dargestellt), erfolgen kann. Dabei werden je zwei aufeinander folgende Gangstufen durch Betätigen einer Kupplungseinrichtung 74, 76 bzw. 78, 80 ausgewählt, wobei bei einem Wechsel zu den zwei nächsten höheren oder niedrigeren Gangstufen eine Kupplungseinrichtung 74, 76 bzw. 78, 80 der jeweils gegenüber liegenden Vorgelegewelle 50, 52 angewählt wird. Für das in Figur 1 dargestellte Ausführungsbeispiel werden die Gangstufen 1 und 2 durch die Kupplungseinrichtung 76, die Gangstufen 3 und 4 durch die Kupplungseinrichtung 80, die Gangstufen 5 und 6 durch die Kupplungseinrichtung 74 und die Gangstufen 7 und 8 durch die Kupplungseinrichtung 78 angewählt.

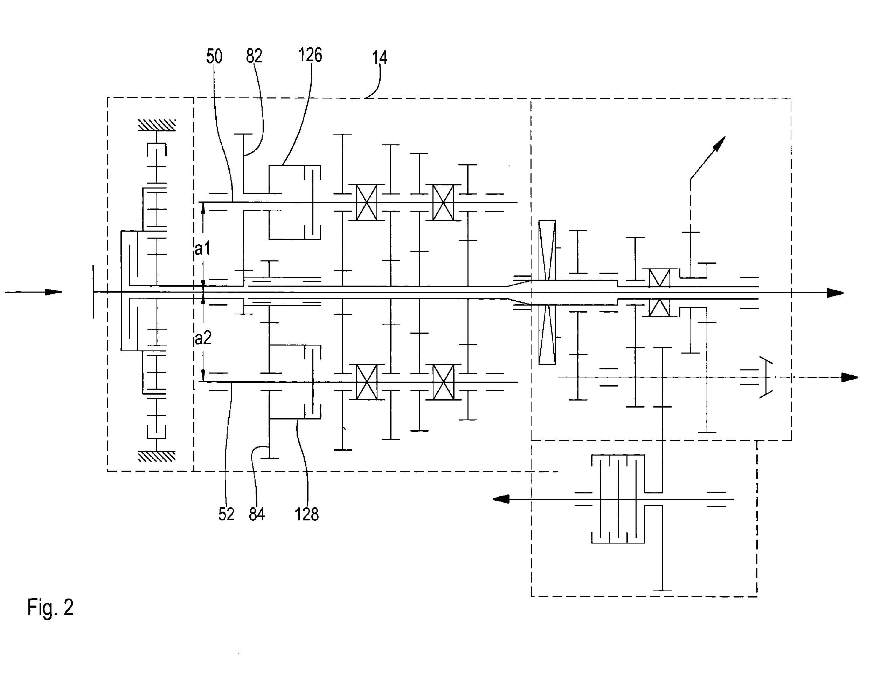

Eine erweiterte Ausführungsform der Getriebeanordnung ist in Figur 2 dargestellt, wobei hier die zweite Getriebeeinheit 14 als Doppelkupplungsgetriebe ausgebildet ist. Dazu ist auf der Vorgelegewelle 50 eine erste Kupplungseinrichtung 126 und auf der Vorgelegewelle 52 eine zweite Kupplungseinrichtung 128 angeordnet. Der restliche Teil der Getriebeanordnung 10 ist unverändert. Die erste Kupplungseinrichtung 126 steht mit dem Zahnrad 82 und die zweite Kupplungseinrichtung 128 mit dem Zahnrad 84 in Verbindung. Die Kupplungseinrichtungen 126, 128 sind derart ausgebildet und angeordnet, dass durch Betätigung der Kupplungseinrichtungen 126, 128 die Zahnräder 82, 84 in Antriebsverbindung mit der jeweiligen Vorgelegewelle 50, 52 gebracht werden können. Somit kann die Antriebsverbindung zwischen der Eingangswelle 46 und den Vorgelegewellen 50, 52 gleichzeitig oder abwechselnd beliebig unterbrochen werden. Eine derartige Ausgestaltung der zweiten Getriebeeinheit 14 stellt ein Doppelkupplungsgetriebe dar und ermöglicht ein Schalten zwischen den Gangstufen, ohne dass eine Unterbrechung der Antriebsverbindung zwischen Eingangswelle 46 und Ausgangswelle 48 eintritt. Die Anordnung ist dabei so getroffen, dass die aufeinanderfolgenden Gänge abwechselnd einer der beiden Vorgelegewellen 50, 52 zugeordnet sind, so dass beim Schalten von einem Gang auf den nächsten Gang die dem nächsten Gang zugehörige Vorgelegewelle 50, 52 bei geöffneter Kupplungseinrichtung 126, 128 von der Ausgangswelle 48 über die Kupplungseinrichtung 74, 76, 78, 80 auf die dem Gang entsprechende Drehzahl gebracht werden kann, bevor die Kupplungseinrichtung 126, 128 der einen Vorgelegewelle 50, 52 geschlossen und zugleich die Kupplungseinrichtung 126, 128 der anderen Vorgelegewelle 50, 52 geöffnet wird. So kann durch wechselseitiges Betätigen der den Vorgelegewellen 50, 52 zugeordneten Kupplungseinrichtungen 126, 128 ohne Unterbrechung der Antriebsverbindung und unter Last ein Abtriebsmoment für die Ausgangswelle 48 von der einen Vorgelegewelle 50, 52 auf die andere übertragen werden. Für das in Figur 2 dargestellte Ausführungsbeispiel werden die Gangstufen 1 und 3 durch die Kupplungseinrichtung 76, die Gangstufen 2 und 4 durch die Kupplungseinrichtung 80, die Gangstufen 5 und 7 durch die Kupplungseinrichtung 74 und die Gangstufen 6 und 8 durch die Kupplungseinrichtung 78 angewählt.

Wie in den Figuren 1 und 2 dargestellt ist, sind die Vorgelegewellen 50, 52 in einem Abstand a1 bzw. a2 zu der Eingangs- bzw. Ausgangswelle 46, 48 angeordnet. Bei gleichem Achsabstand der Vorgelegewellen 50, 52 zu der Eingans - und der Ausgangswelle 46, 48 (Achsabstand a1 = a2) können mit einer Getriebeanordnung 10 gemäß der Darstellung in den Figuren 1 und 2 relativ konstante Gangstufensprünge realisiert werden, wobei die vier verschiedenen Synchronzahnräder 58, 60, 62, 64 der einen Vorgelegewelle 50 identisch mit den Synchronzahnrädern 66, 68, 70, 72 auf der zweiten Vorgelegewelle 52 sind. Dies führt zu einer kostengünstigen Ausbildung der Getriebeanordnung 10 mit relativ konstanten Gangstufensprüngen, wie in Tabelle 1 und 2 für eine Getriebeanordnung 10 mit handschaltbarer zweiten Getriebeeinheit 14 gemäß Figur 1 und in Tabelle 3 und 4 für eine Getriebeanordnung 10 mit als Doppelkupplungsgetriebe ausgebildeter zweiten Getriebeeinheit 14 gemäß Figur 2 dargestellt ist. Für das in Tabelle 1 und 2 dargestellte Beispiel einer Zähnezahlkombination der Synchronzahnräder 58, 60, 62, 64, 66, 68, 70, 72 und Zahnräder 86, 88, 90, 92 bei gleichen Zahnradmodulen werden Gangstufensprüngen von beispielsweise 20% bis 23% erreicht, wobei für dieses Beispiel für das erste Zahnrad 54, das zweite Zahnrad 56, das Zahnrad 82 und das Zahnrad 84 die entsprechenden Zähnezahlen mit 43, 55, 88 und 76 gewählt wurden.

**Tabelle 1 (Getriebeanordnung 10 mit handschaltbarer zweiten Getriebeeinheit 14, Achsabstand a1 und a2 = 131 mm):**

| Gangstufe | Gangstufensprung [%] |
|---|---|
| 1 | - |
| 2 | 22,5 |
| 3 | 20, 9 |
| 4 | 22,5 |
| 5 | 22,2 |
| 6 | 20,2 |
| 7 | 23,2 |
| 8 | 20,2 |

**Tabelle 2 (Getriebeanordnung 10 mit handschaltbarer zweiten Getriebeeinheit 14, Achsabstand a1 und a2 = 131 mm):**

| Synchronzahnrad/Zahnrad | Zähnezahl |
|---|---|
| 58 | 73 |
| 60 | 67 |
| 62 | 48 |
| 64 | 42 |
| 66 | 73 |
| 68 | 67 |
| 70 | 48 |
| 72 | 42 |
| 86 | 58 |
| 88 | 64 |
| 90 | 83 |
| 92 | 89 |

Für das in Tabelle 3 und 4 dargestellte Beispiel einer Zähnezahlkombination der Synchronzahnräder 58, 60, 62, 64, 66, 68, 70, 72 und Zahnräder 86, 88, 90, 92 bei gleichen Zahnradmodulen werden Gangstufensprüngen von beispielsweise 22% bis 23% erreicht, wobei für dieses Beispiel für das erste Zahnrad 54, das zweite Zahnrad 56, das Zahnrad 82 und das Zahnrad 84 die entsprechenden Zähnezahlen mit 27, 31, 38 und 36 gewählt wurden.

**Tabelle 3 (Getriebeanordnung 10 mit zweiter Getriebeeinheit 14 als Doppelkupplungsgetriebe, Achsabstand a1 = a2):**

| Gangstufe | Gangstufensprung [%] |
|---|---|
| 1 | - |
| 2 | 21,2 |
| 3 | 23,0 |
| 4 | 21,2 |
| 5 | 22,5 |
| 6 | 21,2 |
| 7 | 22,1 |
| 8 | 21,2 |

**Tabelle 4 (Getriebeanordnung 10 mit zweiter Getriebeeinheit 14 als Doppelkupplungsgetriebe, Achsabstand a1 = a2):**

| Synchronzahnrad/Zahnrad | Zähnezahl |
|---|---|
| 58 | 39 |
| 60 | 32 |
| 62 | 26 |
| 64 | 20 |
| 66 | 39 |
| 68 | 32 |
| 70 | 26 |
| 72 | 20 |
| 86 | 28 |
| 88 | 34 |
| 90 | 41 |
| 92 | 47 |

Eine gemäß der Tabellen 1 und 2 bzw. 3 und 4 ausgebildete zweite Getriebeeinheit 14 erlaubt, bei gleichem Achsabstand der Vorgelegewellen 50, 52 (a1=a2), relativ konstante Stufensprünge im genannten Bereich unter Verwendung gleich großer Module für alle Zahnräder (58, 60, 62, 64, 66, 68, 70, 72, 86, 88, 90, 92) was ein Kostenvorteil bei der Herstellung der Zahnräder bedeutet. (Minimierung der Rüstzeitkosten der Verzahnungsmaschinen). Sollte eine noch geringere Abweichung erwünscht sein, kann dies durch Wahl von unterschiedlich großen Modulen für die jeweiligen Zahnradpaare erreicht werden. Die Bestimmung der Zähnezahlen kann mit Hilfe eines Rechner gestützten Verfahrens, in Abhängigkeit eines gewünschten Stufensprungs und eines gewünschten Achsabstands, sowie eines gewünschten Zahnradmoduls erfolgen.

Sollten jedoch auch variable Gangstufensprünge gewünscht sein, beispielsweise für landwirtschaftliche Fahrzeuge oder Nutzfahrzeuge, welche hauptsächlich zu Transportzwecken eingesetzt werden sollen, dann kann die Getriebeanordnung 10 auch mit ungleichen Achsabständen für die Vorgelegewellen 50, 52 der zweiten Getriebeeinheit 14 ausgebildet werden (nicht dargestellt). Bei ungleichen Achsabständen der Vorgelegewellen 50, 52 zu der Eingangs- bzw. Ausgangswelle 46, 48 der zweiten Getriebeeinheit 14 (Achsabstand a1 ≠ a2) können mit der Getriebeanordnung 10 variable Stufensprünge realisiert werden, sowohl für eine Getriebeanordnung 10 gemäß Figur 1 als für eine Getriebeanordnung gemäß Figur 2. Dabei wären die sich gegenüberliegenden Synchronzahnräder auf den jeweiligen Vorgelegewellen 50, 52 nicht mehr gleichen Durchmessers, der restliche Aufbau der Getriebeanordnung 10 bliebe jedoch unverändert. Ein Beispiel für eine Zahnradkombination mit unterschiedlichen Achsabständen (Achsabstand a1 ≠ a2) ist in den Tabellen 5 und 6 für eine Getriebeanordnung 10 mit als Doppelkupplungsgetriebe gemäß Figur 2 ausgebildeter zweiter Getriebeeinheit 14 dargestellt. Für das in Tabelle 5 und 6 dargestellte Beispiel einer Zähnezahlkombination der Synchronzahnräder 58, 60, 62, 64, 66, 68, 70, 72 und Zahnräder 86, 88, 90, 92 werden Gangstufensprüngen von beispielsweise 23% bis 36% erreicht, wobei für dieses Beispiel für das erste Zahnrad 54, das zweite Zahnrad 56, das Zahnrad 82 und das Zahnrad 84 die entsprechenden Zähnezahlen mit 45, 51, 86 und 86 gewählt wurden.

**Tabelle 5 (Getriebeanordnung 10 mit zweiter Getriebeeinheit 14 als Doppelkupplungsgetriebe, Achsabstand a1=131 mm und a2=139 mm):**

| Gangstufe | Gangstufensprung [%] |
|---|---|
| 1 | - |
| 2 | 36, 6 |
| 3 | 33,0 |
| 4 | 29,2 |
| 5 | 22,6 |
| 6 | 25,9 |
| 7 | 24,4 |
| 8 | 23,9 |

**Tabelle 6 (Getriebeanordnung 10 mit zweiter Getriebeeinheit 14 als Doppelkupplungsgetriebe, Achsabstand a1=131 mm und a2=139 mm):**

| Synchronzahnrad/Zahnrad | Zähnezahl |
|---|---|
| 58 | 86 |
| 60 | 72 |
| 62 | 57 |
| 64 | 39 |
| 66 | 94 |
| 68 | 80 |
| 70 | 65 |
| 72 | 47 |
| 86 | 45 |
| 88 | 59 |
| 90 | 74 |
| 92 | 92 |

Mit den in den Figuren 1 und 2 dargestellten Getriebekonzepten kann ein Fahrzeughersteller eine Getriebeanordnung 10 anbieten, welche die unterschiedlichsten Anwendungen und Anforderungen im landwirtschaftlichen und Nutzfahrzeug spezifischen Sektor erfüllen kann, ohne dabei grundsätzliche verschiedene Getriebekonzepte entwickeln und fertigen zu müssen.

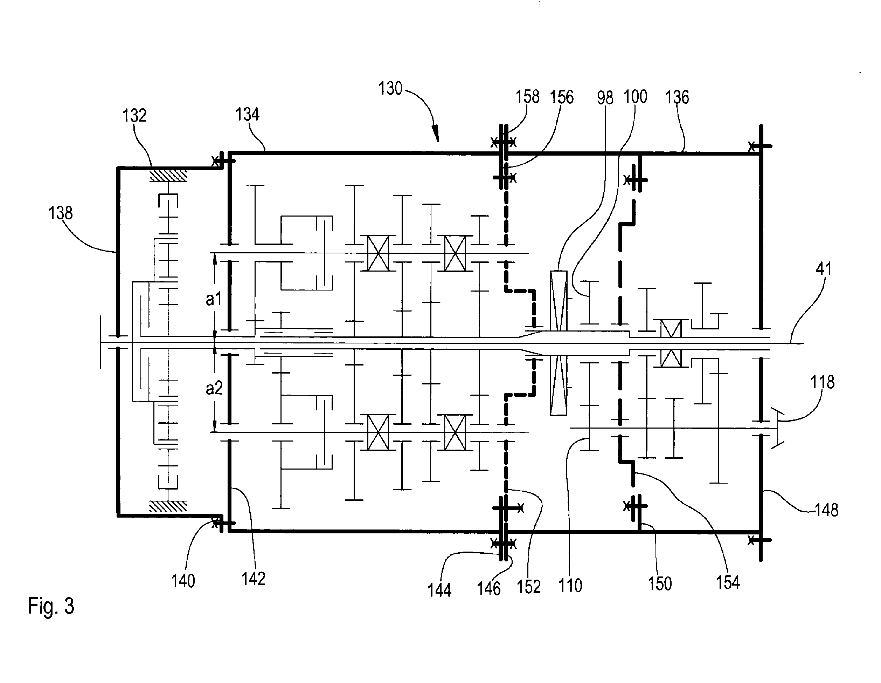

Figur 3 zeigt eine erfindungsgemäße Getriebegehäuseanordnung 130 für eine Getriebeanordnung 10 gemäß den in den Figuren 1 und 2 dargestellten Ausführungsbeispielen. Die Getriebegehäuseanordnung 130 ist modular, also aus mehreren von einander trennbaren Gehäuseteilen oder Gehäusemodulen 132, 134, 136 aufgebaut und weist ein erstes Gehäusemodul 132 für die erste Getriebeeinheit 12, ein zweites Gehäusemodul 134 für die zweite Getriebeeinheit 14 und ein drittes Gehäusemodul 136 für die dritte Getriebeeinheit 16 auf. Das erste Gehäusemodul 132 umfasst eine eingangsseitige Gehäusewand 138 und einen ausgangsseitigen Gehäuseflansch 140. Das zweite Gehäusemodul 134 umfasst eine eingangsseitige Gehäusewand 142 und einen ausgangsseitigen Gehäuseflansch 144. Das dritte Gehäusemodul 136 umfasst einen eingangsseitigen Gehäuseflansch 146, eine ausgangsseitige Gehäusewand 148 und dazwischen innenseitig angeordnete Befestigungsstellen 150. Der Gehäuseflansch 140 des ersten Gehäusemoduls 132 ist an die Gehäusewand des zweiten Gehäusemoduls 134 und der Gehäuseflansch 146 des dritten Gehäusemoduls 136 an das zweite Gehäusemodul 134 befestigt. Die Getriebegehäuseanordnung 130 umfasst ferner eine Gehäuselagerwand 152 das zweite Gehäusemodul 134 und eine Gehäuselagerwand 154 für das dritte Gehäusemodul 136, wobei die Gehäuselagerwand 152 für das zweite Gehäusemodul 134 an den Gehäuseflansch 144 des zweiten Gehäusemoduls 134 und die Gehäuselagerwand 154 für das dritte Gehäusemodul 136 an den innenseitig angeordneten Befestigungsstellen 150 des dritten Gehäusemoduls 136 befestigbar ist. Die Befestigung der einzelnen Gehäusemodule aneinander erfolgt über konventionelle Verschraubungen (nicht gezeigt) mit entsprechenden Dichtungen zwischen den Trennflächen der einzelnen Gehäusemodule 132, 134, 136. Das dritte Gehäusemodul 136 ist bei dem in Figur 3 dargestellten Ausführungsbeispiel direkt mit dem Gehäuseflansch 144 des zweiten Gehäusemoduls 134 verschraubt. Der Gehäuseflansch 144 des zweiten Gehäusemoduls 134 ist derart bemessen, dass die Gehäuselagerwand 152 für das zweite Gehäusemodul 134 an einer inneren Befestigungsfläche 156 des Gehäuseflansches 144 und der eingangsseitige Gehäuseflansch 146 des dritten Gehäusemoduls 136 an einer äußeren Befestigungsfläche 158 des Gehäuseflansches 144 befestigt wird, so dass vorteilhaft nur eine Trennfläche zwischen dem zweiten und dem dritten Gehäusemodul 134, 136 gebildet wird.

Die innenseitig angeordneten Befestigungsstellen 150 des dritten Gehäusemoduls 136 sind derart innerhalb des Gehäusemoduls 136 angeordnet, dass bei montiertem Gehäusemodul 136 die montierte Gehäuselagerwand 154 des dritten Gehäusemoduls 136 zwischen dem Zahnradpaar 100, 110 mit Kupplungseinrichtung 98 und den Zahnradpaarungen 104, 112 bzw. 106, 114 mit Kupplungseinrichtung 102 angeordnet ist. Eine derartige Anordnung ermöglicht es, dass ein Wechsel oder Austausch des Zahnradpaares 100, 110 der Kupplungseinrichtung 98 in der dritten Getriebeeinheit 16, also des Zahnradpaares 100, 110, mit welchem die maximale Ausgangsdrehzahl variierbar ist, leicht und kostengünstig ausführen lässt, ohne die dritte Getriebeeinheit 16 komplett demontieren zu müssen.

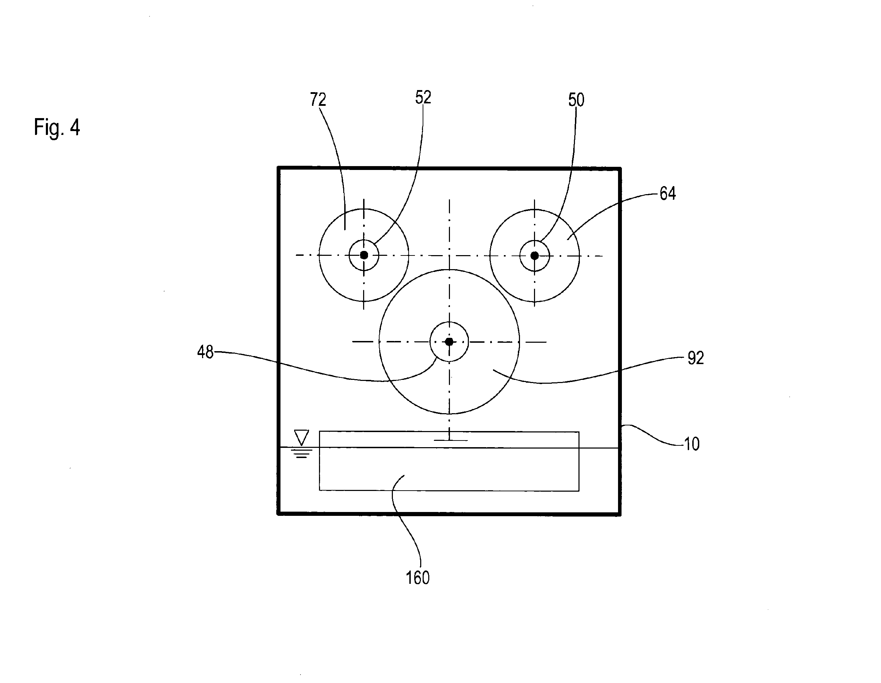

Die in der zweiten Getriebeeinheit 14 angeordneten Vorgelegewellen 50, 52 sind in Bezug auf die in Figur 3 dargestellte Getriebegehäuseanordnung 130 oberhalb der Eingangs- und Ausgangswelle 46, 48 angeordnet, wie anschaulich schematisch in Figur 4 dargestellt ist. Die Kupplungseinrichtungen 74, 76, 78, 80 in der zweiten Getriebeeinheit 14 umfassen dabei elektromagnetische Aktuatoren 160, welche in Bezug auf das Getriebegehäuse bzw. Gehäusemodul 134 der zweiten Getriebeeinheit 14 unterhalb der Ausgangswelle 48 angeordnet sind. Die Vorgelegewellen 50, 52 befinden sich damit im oberen Teil des Getriebegehäuses bzw. Gehäusemoduls 134 und sind vorteilhaft oberhalb des Ölspiegels der Getriebeanordnung 10 positioniert, wodurch Planschverluste reduziert bzw. ein verbesserter Wirkungsgrad erzielbar ist. Die elektromagnetischen Aktuatoren 160, welche Schaltkräfte für die Synchronisierung an den Kupplungseinrichtungen 74, 76, 78, 80 erzeugen bzw. welche die Schaltkräfte an entsprechende Schaltungseinrichtungen (nicht dargestellt) weiter leiten, befinden sich unterhalb der Ausgangswelle 48 der zweiten Getriebeeinheit 14 im Ölstrom der Getriebeanordnung 10 und können dadurch optimal gekühlt werden. Damit besonders gute Lastschalteigenschaften erzielt werden, wird im Falle der Anordnung eines Doppelkupplungsgetriebes für die zweite Getriebeeinheit 14 für jede Kupplungseinrichtung 126, 128 ein eigenes unabhängig steuerbares Proportionalventil angeordnet.

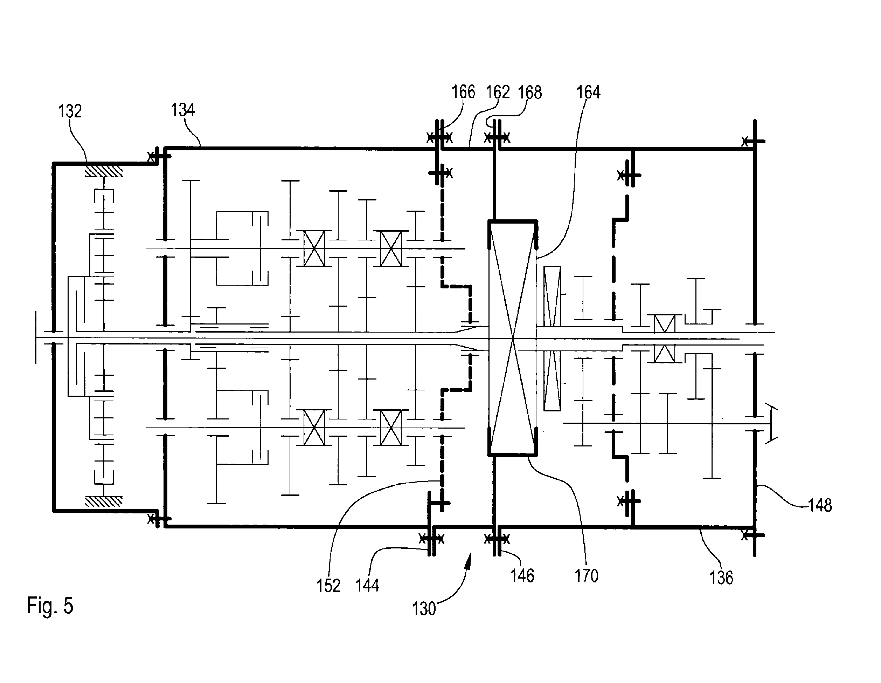

In einer weiteren Ausgestaltung der Erfindung kann ein Zwischengehäusemodul 162 für eine Zwischengetriebeeinheit 164 vorgesehen sein, welches einen eingangsseitigen und einen ausgangsseitigen Gehäuseflansch 166, 168 aufweist. Ein derartiges Ausführungsbeispiel ist in Figur 5 dargestellt. Der eingangsseitige Gehäuseflansch 166 ist dabei derart ausgelegt, dass dieser an den ausgangsseitigen Gehäuseflansch 144 oder, wie bei dem Ausführungsbeispiel gemäß Figur 3 beschrieben, an der Gehäuselagerwand 152 des zweiten Gehäusemoduls 134 befestigbar ist. Der ausgangsseitige Gehäuseflansch 168 ist derart ausgelegt, dass dieser an den eingangsseitigen Gehäuseflansch 146 des dritten Gehäusemoduls 136 befestigbar ist. Dadurch wird für den Fall, dass beispielsweise eine Zwischengetriebeeinheit 164 in Form eines Kriechgangmoduls oder eines anderen Untersetzungsgetriebes gewünscht ist, der Montageaufwand auf ein Minimum reduziert. Das Zwischengehäusemodul 162 kann entsprechende innen liegende Lagerstellen 170, beispielsweise in Form von Stegen oder anderen Befestigungseinrichtungen aufweisen, auf denen Konstruktionselemente der Zwischengetriebeeinheit 164, wie z.B. eine Zahnraduntersetzungsstufe lagerbar sind.

Für eine weitere oder vierte Getriebeeinheit 18 kann ein weiteres Gehäusemodul (nicht dargestellt) vorgesehen sein, welches einen eingangsseitigen Gehäuseflansch aufweist. Dieser kann an einen zwischen dem eingangsseitigen Gehäuseflansch 146 und der ausgangsseitigen Gehäusewand 148 des dritten Gehäusemoduls 136 angeordneten Anschlussflansch (nicht dargestellt) befestigt werden. Letzterer kann beispielsweise auf der Unterseite des dritten Gehäusemoduls 136 angeordnet sein, wobei die vierte Getriebeeinheit 18 ein Antriebsmodul bzw. Antriebseinheit für einen Vorderradantrieb darstellt. Die sich durch den Anschlussflansch und dem eingangsseitigen Gehäuseflansch des vierten Gehäusemoduls erstreckende Zahnradpaarung 116, 124 liefert dabei das für einen Vorderradantrieb erforderliche Antriebsmoment, wobei die Zahnradpaarung 116, 124 durch das auf der Ausgangswelle 96 der dritten Getriebeeinheit 16 angeordnete Zahnrad 116 und durch das in der vierten Getriebeeinheit 18 angeordnete Zahnrad 124 hergestellt ist. Wie schon zuvor erwähnt, können auch noch weitere Gehäusemodule (nicht dargestellt) an die bestehende modulare Getriebegehäuseanordnung 130 angeschlossen werden. So kann beispielsweise über einen weiteren Anschlussflansch an dem dritten Gehäusemodul 136 ein Parksperrenmodul angeschlossen werden, welches das Blockieren des auf der Eingangs- oder Ausgangswelle 94, 96 der dritten Getriebeeinheit 16 angeordneten Zahnrads 108 ermöglicht. Weitere Anschlussmöglichkeiten für weitere Gehäusemodule können an der Gehäusewand 148 des dritten Gehäusemoduls 136 vorgesehen sein, um beispielsweise ein Differenzialgetriebe (nicht dargestellt) oder ein Zapfwellengetriebe (nicht dargestellt) an die sich durch die Gehäusewand 148 des dritten Gehäusemoduls 136 erstreckende Getriebewelle 41 bzw. Ausgangswelle 96 anzuschließen.

Das Konzept der Getriebegehäuseanordnung 130 ist demnach so ausgebildet, das am zweiten Gehäusemodul 134 eine Gehäusewand 142 ausgebildet ist, woran das Gehäusemodul 132 der als Reversiergetriebe ausgebildeten ersten Getriebeeinheit 12 angebaut werden kann. Gemäß der oben dargestellten Ausführung besitzt das zweite Gehäusemodul 134 an seiner Ausgangsseite eine so große Öffnung, so dass alle vier Wellen des zweiten Getriebemoduls 46, 48, 50, 52 gemeinsam und gleichzeitig zusammen mit ihren Schalteinrichtungen als Einheit montierbar sind. Das erlaubt eine komplette Vormontage der vier Wellen 46, 48, 50, 52 der zweiten Getriebeeinheit 14 und deren notwendigen Einstellung des axialen Spiels von Synchronzahnrädern 58, 60, 62, 64, 66, 68, 70, 72 und des axialen Spiels der Synchroneinheiten 74, 76, 78, 80 außerhalb der Getriebegehäuseanordnung 10. Außerdem kann bei einer Vielzahl von verschiedenen Ausführungen der zweiten Getriebeeinheit 14 (beispielsweise als Handschaltgetriebe oder als Doppelkupplungsgetriebe), hinsichtlich Übersetzungen und Gangstufensprüngen, eine einfache Kontrolle erfolgen, bevor die Wellen 46, 48, 50, 52 der zweiten Getriebeeinheit 14 in das Gehäusemodul 134 bzw. in der Gehäusemodulanordnung 130 montiert werden. Letzteres vermeidet mögliche Auswahl- bzw. Montagefehler.

Eine erfindungsgemäße Getriebeanordnung 10 bzw. Getriebegehäuseanordnung 130 bietet eine hohe Flexibilität bei der Auswahl unterschiedlichster Übersetzungen für die einzelnen Gangstufen und deren weiteren Abstufungen. Konstante als auch variable Gangstufensprünge sind leicht zu realisieren und können auch später leicht den Kundenanforderungen angepasst bzw. verändert werden. Der Wirkungsgrad bzw. die Leistungsverluste der dargestellten Getriebeanordnung 10 weisen über den gesamten Lastbereich einen diskreten stetigen Verlauf auf, wobei durch die dargstellte Anordnung der einzelnen Komponenten der Getriebeanordnung 10 beste Voraussetzungen für gute Wirkungsgrade gegeben sind. Die Anpassung der Höchstgeschwindigkeiten in der dritten Getriebeeinheit 16 ist besonders einfach und präzise möglich, so dass Kundenwünsche und gesetzliche Vorschriften in einem weiten Bereich erfüllt werden können, wobei es nicht mehr nötig ist die Übersetzung anderer an die Getriebegehäuseanordnung angeschlossener Getriebeeinheiten, beispielsweise die eines Differenzialgetriebes oder die eines Vorderradantriebs, anzupassen.

## Patentansprüche

1. Getriebeanordnung (10) für ein landwirtschaftliches Fahrzeug, mit einer ersten Getriebeeinheit (12), einer ausgangsseitig daran gekoppelten zweiten Getriebeeinheit (14) und einer ausgangsseitig daran gekoppelten dritten Getriebeeinheit (16), wobei die zweite Getriebeeinheit (14) eine Eingangswelle (46), eine Ausgangswelle (48) und zwei Vorgelegewellen (50, 52) umfasst, wobei die Eingangswelle (46) mit den Vorgelegewellen (50, 52) in Antriebsverbindung und die Vorgelegewellen (50, 52) mit der Ausgangswelle (48) in Antriebsverbindung bringbar sind und wobei die dritte Getriebeeinheit (16) eine Eingangswelle (94) umfasst, die mit einer dazu parallel angeordneten Ausgangswelle (96) in Antriebsverbindung bringbar ist, wobei die erste Getriebeeinheit (12) als Planetengetriebe ausgebildet ist und ein der ersten Getriebeeinheit (12) zugehöriges Sonnenrad (22), die Eingangswelle (46) und die Ausgangswelle (48) der zweiten Getriebeeinheit (14), sowie die Eingangswelle (94) der dritten Getriebeeinheit (16) koaxial zueinander angeordnet sind, wobei ein Ausgang der ersten Getriebeeinheit (12) drehfest mit der Eingangswelle (46) der zweiten Getriebeeinheit (14) und die Ausgangswelle (48) der zweiten Getriebeeinheit (14) drehfest mit der Eingangswelle (94) der dritten Getriebeeinheit (16) verbunden ist.

2. Getriebeanordnung (10) nach Anspruch 1, **dadurch gekennzeichnet, dass** die Eingangswelle (46) der zweiten Getriebeeinheit (14) und die Ausgangswelle (48) der zweiten Getriebeeinheit (14) eine gemeinsame Lagerstelle (93) aufweisen.

## Claims

1. Gear assembly (10) for an agricultural vehicle comprising a first gear unit (12), a second gear unit (14) that is coupled to the first unit on the output side, and a third gear unit (16) that is coupled to the second unit on the output side, wherein the second gear unit (14) comprises an input shaft (46), an output shaft (48) and two layshafts (50, 52), wherein the input shaft (46) can be brought in driving engagement with the layshafts (50, 52) and the layshafts (50, 52) can be brought in driving engagement with the output shaft (48), and wherein the third gear unit (16) comprises an input shaft (94) which can be brought in driving engagement with an output shaft (96) disposed parallel thereto, wherein the first gear unit (12) is designed as a planetary gear and a sun gear (22) associated with the first gear unit (12), the input shaft (46) and the output shaft (48) of the second gear unit (14), and the input shaft (94) of the third gear unit (16) are disposed coaxially with respect to one another, wherein an output of the first gear unit (12) is connected fixedly in terms of rotation to the input shaft (46) of the second gear unit (14) and the output shaft (48) of the second gear unit (14) is connected fixedly in terms of rotation to the input shaft (94) of the third gear unit (16).

2. Gear assembly (10) according to Claim 1, **characterized in that** the input shaft (46) of the second gear unit (14) and the output shaft (48) of the second gear unit (14) have a common bearing point (93).

## Revendications

1. Agencement de transmission (10) pour un véhicule agricole, comprenant une première unité de transmission (12), une deuxième unité de transmission (14) accouplée à celle-ci du côté de la sortie et une troisième unité de transmission (16) accouplée à celle-ci du côté de la sortie, la deuxième unité de transmission (14) comprenant un arbre d'entrée (46), un arbre de sortie (48) et deux arbres intermédiaires (50, 52), l'arbre d'entrée (46) pouvant être amené en liaison d'entraînement avec les arbres intermédiaires (50, 52) et les arbres intermédiaires (50, 52) pouvant être amenés en liaison d'entraînement avec l'arbre de sortie (48) et la troisième unité de transmission (16) comprenant un arbre d'entrée (94), qui peut être amené en liaison d'entraînement avec un arbre de sortie (96) disposé parallèlement à celui-ci, la première unité de transmission (12) étant réalisée sous forme de transmission planétaire et une roue solaire (22) associée à la première unité de transmission (12), l'arbre d'entrée (46) et l'arbre de sortie (48) de la deuxième unité de transmission (14), ainsi que l'arbre d'entrée (94) de la troisième unité de transmission (16) étant disposés coaxialement les uns aux autres, une sortie de la première unité de transmission (12) étant connectée de manière solidaire en rotation à l'arbre d'entrée (46) de la deuxième unité de transmission (14) et l'arbre de sortie (48) de la deuxième unité de transmission (14) étant connecté de manière solidaire en rotation à l'arbre d'entrée (94) de la troisième unité de transmission (16).

2. Agencement de transmission (10) selon la revendication 1, **caractérisé en ce que** l'arbre d'entrée (46) de la deuxième unité de transmission (14) et l'arbre de sortie (48) de la deuxième unité de transmission (14) présentent un point de palier commun (93).
